# DEMANDE DE BREVET EUROPEEN

(11) **EP 0 547 935 A1**
(43) Date de publication de la demande: **23.06.1993**
(21) Numéro de dépôt: 92403252.7
(22) Date de dépôt: 02.12.1992
(51) Int. Cl.: G01D 11/24, H02K 29/08

(54) **Dispositif de mesure de la position angulaire instantanée d'un rotor d'une machine électrodynamique**

(30) Priorité: 06.12.1991 FR 9115164
(71) Demandeur: VALEO SYSTEMES D'ESSUYAGE, 78180 Montigny-Le-Bretonneux (FR)
(72) Inventeur: Materne, Xavier, F-92120 Montrouge (FR); Dazat, Richard, F-92320 Chatillon (FR)
(74) Mandataire: Gamonal, Didier

(57) **Abrégé**

La présente invention concerne un dispositif de mesure de la position angulaire instantanée d'une partie tournante. Elle concerne aussi une machine électrodynamique équipée d'un tel dispositif.

L'invention se caractérisé notamment en ce qu'un organe de lecture (1) comporte au moins un capteur (20,22) destiné à produire un signal de détection quand l'indication (9) passe à proximité dudit capteur, et en ce que chaque capteur est constitué par un boîtier comportant une face de référence, et étant introduit par glissement dans des logements respectifs (82, 83) d'un support (21).

## Description

La présente invention concerne un dispositif de mesure de la position angulaire instantanée d'une partie tournante. Elle concerne aussi une machine électrodynamique équipée d'un tel dispositif.

Dans l'art antérieur, on a déjà proposé des dispositifs de mesure de la position angulaire instantanée d'un partie tournante. En particulier, on sait dériver d'un tel dispositif un signal de mesure de la position, un signal de mesure du sens de rotation, ou encore un signal de mesure de la vitesse de rotation. Ces signaux peuvent être exploités pour piloter la machine dans laquelle se trouve installée la partie tournante et le dispositif de mesure.

Mais c'est un problème difficilement résolu que de positionner avec précision et simplicité le dispositif de mesure par rapport à la machine d'une part et à la partie tournante de la machine d'autre part.

C'est un objet de l'invention de porter remède à cet inconvénient de l'art antérieur.

Quand la machine est un moteur notamment la partie tournante est constituée par son rotor. Il est connu de disposer un organe de mesure de sa position angulaire instantanée. Mais les solutions de l'art antérieur ne permettent pas de réaliser facilement et avec précision un positionnement unitaire du dispositif de mesure.

C'est un autre objet de la présente invention de résoudre cet inconvénient de l'art antérieur.

Dans l'art antérieur, les moteurs ou autres machines électrodynamiques comportent des circuits électriques de service. Mais l'installation d'un dispositif de mesure de la position angulaire instantanée du rotor complique notablement ces circuits.

C'est un autre objet de la présente invention de porter remède à cet inconvénient de l'art antérieur.

L'invention concerne aussi une machine électrodynamique. Elle comporte un dispositif de mesure de la position angulaire instantanée de son rotor, l'organe de lecture du dispositif étant monté sur le circuit imprimé portant les circuits électriques de service de la machine.

Un dispositif de mesure de la position angulaire instantanée d'une partie tournante, comme le rotor d'une machine électrodynamique comme un moteur, du type comportant un organe de lecture lié à une partie fixe, comme le stator de ladite machine électrodynamique, et un support d'une indication de position angulaire lié à la partie tournante est, selon l'invention, caractérisé en ce qu'il comporte au moins un capteur destiné à produire un signal de détection quand l'indication passe à proximité dudit capteur. Chaque capteur est constitué par un boîtier comportant une face de référence, et étant introduit par glissement dans des logements respectifs d'un support.

D'autres caractéristiques et avantages de la présente invention seront mieux compris à l'aide de la description et des dessins annexés qui sont :
- la figure 1 : un schéma du rotor monté sur un socle d'une machine selon l'invention ;
- la figure 2 : une vue en coupe de l'accrochage de la roue liée au collecteur ;
- la figure 3 : une vue générale du rotor avec la roue liée au collecteur ;
- la figure 4 : un détail de la fixation de l'organe de lecture dans une machine de l'invention ;
- la figure 5 : la vue de dessus d'un composant de la machine de la figure 4 ;
- la figure 6 : une vue de montage en perspective d'un mode de réalisation d'un organe de lecture selon l'invention sur un composant de la machine de la figure 1.

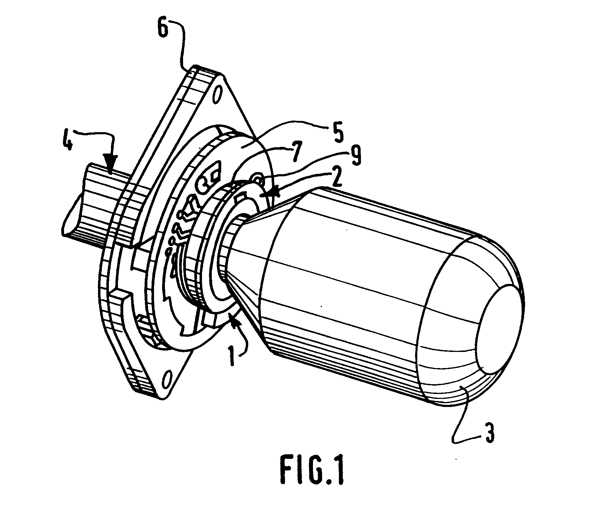

A la figure 1, on a représenté un schéma en perspective d'un rotor équipé d'une roue selon l'invention. Le rotor comporte un bobinage d'induit 3 et un collecteur 7 montés sur un arbre de rotation 4. Dans d'autres modes de réalisation, le rotor est muni seulement de bobinages sans collecteur (cas notamment d'un moteur à cage d'écureuil) ou encore sans bobinage, mais est doté de zones aimantées ou aimants permanents (cas d'un moteur à commutation électronique).

Le collecteur 7 passe à travers un trou percé sur un circuit imprimé 5 qui supporte le circuit électrique de service qui sera décrit plus loin. Le circuit imprimé 5 est monté sur des pattes de support (non représentées) montées sur la face intérieure d'un socle 6 ou pièce intermédiaire qui sert à fermer la carcasse (non représentée) de la machine, et à réaliser sa fixation à un support ou à un autre organe comme un réducteur à engrenages.

A une extrémité du collecteur 7, est montée une roue 2 sur laquelle est portée une indication 9 de position angulaire. Cette indication peut être obtenue, notamment par inscription d'une marque lisible opti- quement ou par enregistrement d'une information magnétique. Dans un mode de réalisation, cette indication est constituée par une indication ou marque unique 9. Sur le circuit imprimé 5 est monté un organe de lecture 1 de l'indication 9 inscrite ou enregistrée sur la roue 2. La nature de l'organe de lecture 1 dépend de la nature de l'indication (magnétique, optique, ou autre).

Dans un exemple de réalisation préféré, l'indication est de nature magnétique. L'organe de lecture est alors constitué par un capteur à effet Hall dont la tension de sortie est modulée en fonction des variations du flux engendré par l'indication magnétique. Ainsi, on peut obtenir un signal de lecture en sortie de l'organe de lecture 1 qui soit à une première valeur (maximale par exemple) quand l'indication 9 est la plus proche de l'organe de lecture et à une seconde valeur (par exemple minimale) quand l'indication est à une distance diamétralement opposée par exemple.

Dans un mode de réalisation, la roue 2 est une roue multipolaire. La roue multipolaire 2 est constituée par une succession de pôles alternativement N et S, disposés à la périphérie de la roue. De ce fait, un signal de lecture en sortie de l'organe de lecture présente une variation dépendant du nombre de pôles, nombre qui permet de définir la précision de la détection de la position angulaire instantanée du rotor.

Dans un mode de réalisation, la roue multipolaire 2 est réalisée en un corps annulaire en matériau magnétique anisotrope qui est magnétisé par une machine de magnétisation qui lui imprime une succession de polarités N et S alternées sur tout son pourtour. Dans un autre mode de réalisation, la roue multipolaire est réalisée en un corps annulaire en matériau amagnétique à la surface extérieure duquel est pratiquée une pluralité de logements qui reçoivent des barreaux d'un matériau magnétique convenablement polarisés.

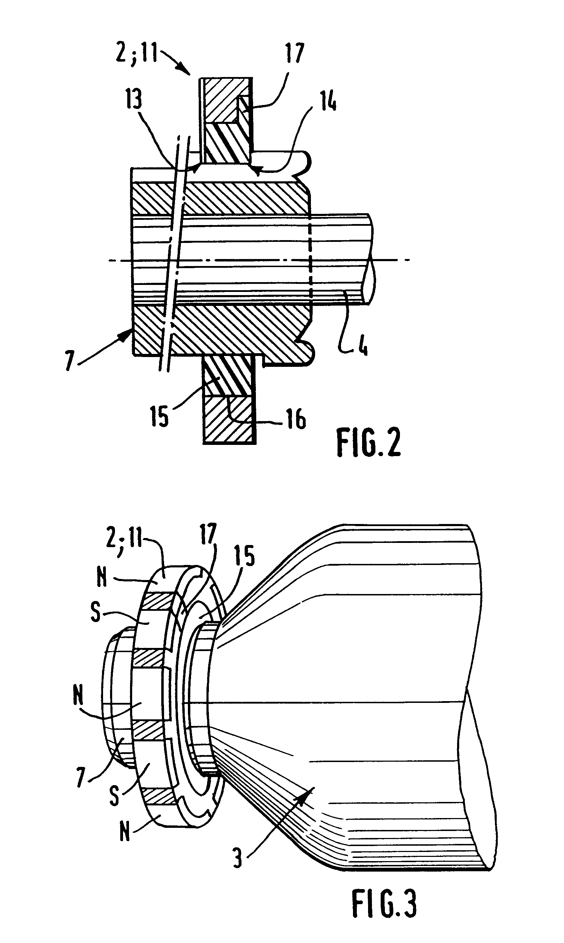

A la figure 2, on a représenté un mode de réalisation de la roue multipolaire 2 ou toute autre roue portant une indication convenable. La roue 11 est portée sur la périphérie du collecteur 12. Des encoches disposées à des intervalles angulaires déterminés sur le collecteur 7, au niveau de moyens de fixation 13,14, de la roue sur le cylindre constitué par le collecteur 7, lesdits moyens étant connus en soi, reçoivent un élément de fixation de la roue 11. Dans un mode de réalisation, un tel élément de fixation est réalisé par une mortaise pratiquée sur une entretoise 15 dont la périphérie 16 porte des languettes 17 qui permettent d'immobiliser la roue 11 en rotation par rapport à l'entretoise 15.

Dans le cas d'une machine sans collecteur, ou si l'on souhaite dégager le collecteur, la roue multipolaire 2 ; 11 peut être montée de la même façon directement sur l'arbre de rotation 4 ou sur une partie convenable du rotor 3.

A la figure 3, on a représenté une vue partielle en perspective du mode de réalisation de la figure 2. Les mêmes références sont appliquées aux mêmes éléments qui ne sont pas plus décrits. On y remarque la constitution en anneau cylindrique sur lequel une succession de pôles magnétiques N et S sont inscrits (cas d'un corps annulaire en matériau magnétique anisotrope) ou insérés (cas d'un corps annulaire en matériau amagnétique, la surface duquel est pratiquée une pluralité de logements).

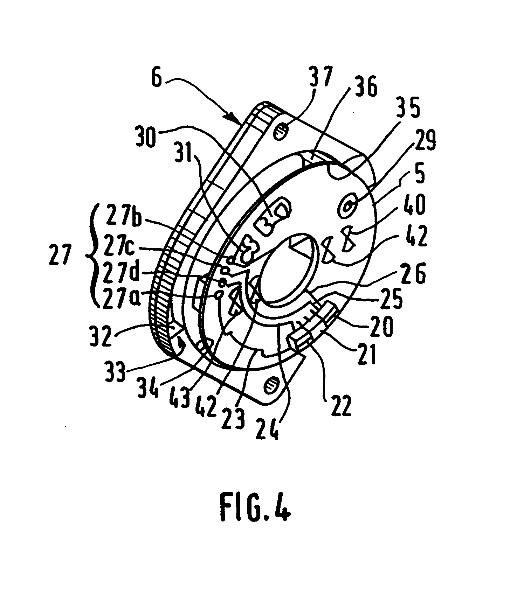

A la figure 4, on a représenté une vue de la pièce intermédiaire 6 équipée. Le circuit imprimé 5 porte dans la partie inférieure au dessin l'organe de lecture 1 constitué par deux capteurs à effet Hall 20,22, répartis par exemple à un intervalle angulaire de 10° l'un de l'autre. Les deux capteurs 20 et 22 sont insérés dans des logements d'un support 21 des capteurs qui permet leur fixation mécanique et leur orientation par rapport à la partie tournante qui porte l'indication de position angulaire comme une marque magnétique précitée. De tels capteurs à effet Hall sont disponibles dans le commerce sous forme d'un boîtier de composant semi-conducteur dont une face doit être disposée parallèlement à la variation de flux à détecter (face capteur à effet Hall). Chaque capteur comporte trois pattes d'accès électriques, de polarisation positive et de polarisation négative (masse) et de détection, respectivement.

La patte de polarisation positive de chaque capteur 20,22 est connectée à une piste 23 sur le circuit imprimé 5. Cette piste 23 débouche sur une zone conductrice 27a du circuit imprimé 5, sur laquelle est soudée une traverse non représentée. La traverse est constituée par un corps conducteur allongée comme une patte. Elle constitue un élément sur lequel on vient souder lors du montage du moteur un fil correspondant d'un câble électrique de liaison de la machine.

De même, la patte de polarisation négative de chaque capteur est connectée à une piste 26 sur le circuit imprimé 5. Cette piste 26 débouche sur une zone conductrice 27b du circuit imprimé 5, sur laquelle est soudée une traverse non représentée. La traverse est constituée par un corps conducteur allongée comme une patte. Elle constitue un élément sur lequel on vient souder lors du montage du moteur, un fil correspondant d'un câble électrique de liaison de la machine.

La patte d'accès électrique de détection de chacun des deux capteurs à effet Hall 20,22 est reliée respectivement à une piste conductrice 24 ou 25 du circuit imprimé. Dans un mode de réalisation, ces deux pistes sont connectées respectivement à des zones conductrices 27c et 27d du circuit imprimé sur lesquelles sont disposées des traverses connectées à des fils corrrespondants du câble de liaison du moteur. De ce fait, la machine de l'invention peut être contrôlée et pilotée depuis l'extérieur, grâce aux signaux de détection transmis par les deux capteurs à effet Hall.

L'ensemble constitué des zones 27a, 27b, 27c et 27d et des traverses constitue une partie d'un bornier 27, qui constitue dans un mode de réalisation la première partie (par exemple, la partie mâle) d'un connecteur dont la seconde partie est portée par l'extrémité du câble électrique de liaison de la machine.

Dans un autre mode de réalisation, le circuit imprimé porte des composants (non représentés au dessin) qui permettent de traiter, sur le circuit électrique de service 5 lui même, les signaux de sortie des capteurs 20, 21, 22. Dans un mode de réalisation, le circuit de service 5 exécute localement l'interface Asservissement électronique (traitement) et machine.

Dans le mode de réalisation de l'invention décrit principalement, l'alimentation électrique de la machine se fait au moyen de charbons et du câble de liaison qui comporte aussi des fils de connexion aux bobinages de la machine, non représentés, et qui parviennent respectivement sur les zones conductrices 30 et 31 depuis lesquelles sont soudés les fils d'extrémité (non représentés) des bobinages du stator (si le stator est bobiné) et/ou les fils de liaison aux charbons sur le collecteur de la machine (alimentation de la machine).

La pièce intermédiaire 6 comporte des oreilles sur lesquelles sont percés des trous 37 et 38 de fixation à un plat de la carcasse (non représentée) de la machine. Le circuit électrique de service 5 est monté à l'intérieur de la pièce intermédiaire 6 dans un creux constitué par un rebord périphérique 33. Ce creux est tourné vers l'intérieur de la machine quand la pièce intermédiaire est montée sur la carcasse. La pièce intermédiaire 6 porte des jambes ou cales de fixation 34 et 36 du circuit imprimé sur lequel est réalisé le circuit électrique de service 5.

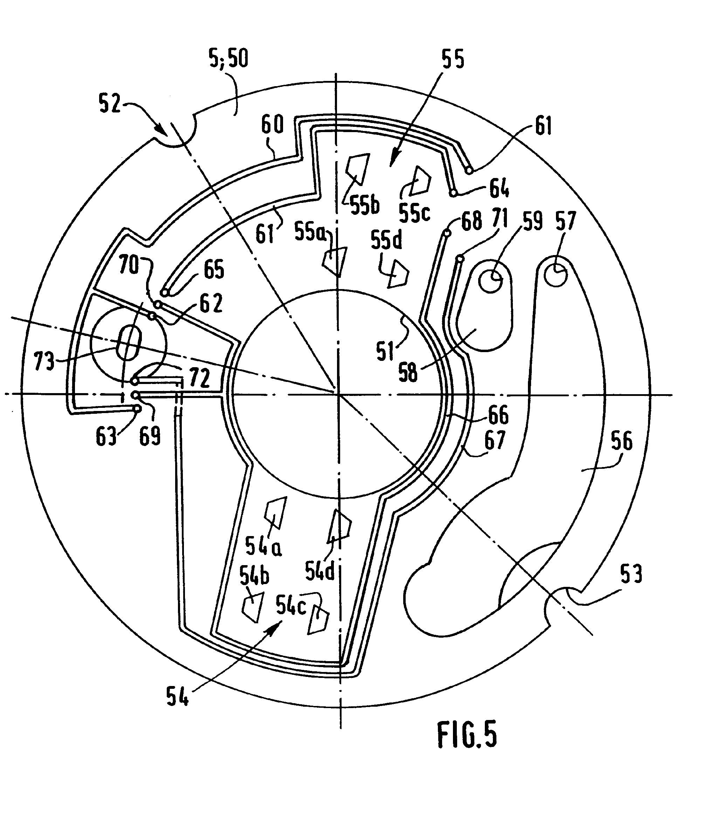

A la figure 5, on a représenté un mode de réalisation du circuit imprimé nu destiné à équiper la pièce intermédiaire 6 de la figure 3. Le circuit imprimé comporte un substrat isolant 50 de forme circulaire percé d'un trou central 51 destiné à laisser passer l'arbre et le collecteur du rotor. La périphérie extérieure du substrat 50 comporte deux encoches 52 et 53 de guidage de la plaquette porte-charbons sur la pièce intermédiaire. Ces encoches sont réalisées par poinçonnage circulaire avec des angles non symétriques de façon à réaliser un détrompage lors du montage du circuit imprimé dans le moteur.

D'autre part, le support 50 a été percé de deux zones 54 et 55 dans lesquelles on a réalisé des trous de fixation de forme trapézoïdale 54a à 54d et 55a à 55d, destinés à recevoir des pattes de fixation de chacun des deux porte-charbons sur la face non représentée au dessin.

Le substrat 50 porte une première zone conductrice 56 destinée à l'alimentation du moteur. Cette zone conductrice 56 est percée d'un trou 57 destiné au passage d'une traverse de connexion. D'autre part, le substrat porte aussi une seconde zone conductrice 58 destinée à recevoir une connexion de masse électrique de puissance. Cette zone conductrice 58 est percée d'un trou 59 destiné au passage d'une traverse de connexion. Les zones conductrices 56 et 58 correspondent aux zones 30 et 31 de la figure 4 et constituent des moyens de connexion à l'alimentation de la machine.

Le substrat 50 porte ensuite des pistes 60 et 61 respectivement attribuées à la masse commune des capteurs à effet Hall et à la sortie d'information d'un premier capteur à effet Hall. La piste 60 relie une zone de connexion 61 d'extrémité de liaison, à deux zones respectivement 62 et 63 pour mettre à la masse respectivement le premier et le second capteur à effet Hall (non représentés). La piste conductrice 61 est reliée à une connexion 64 et à une connexion 65 sur laquelle la patte de sortie d'information du premier capteur à effet Hall est soudée.

Le substrat 50 porte aussi des pistes conductrices respectivement 66 et 67 d'alimentation des capteurs à effet Hall à un potentiel positif d'une part, et à une sortie d'information de capteur à effet Hall d'autre part. La piste 66 relie respectivement une connexion 68 à deux connexions respectivement 69 et 70 sur lesquelles sont fixées les pattes d'alimentation positive des deux capteurs à effet Hall. La piste 67 relie respectivement une zone de connexion 71 à une connexion 72 destinée à recevoir la patte correspondante du second capteur à effet Hall. L'ensemble des zones de connexion 61,64,69,70 correspond au bornier 27 décrit à la figure 4.

Le substrat isolant comporte entre les deux zones de connexion des deux capteurs à effet Hall, 65,70,62 d'une part, et 72,69,63 d'autre part, un trou de fixation 73 de forme oblongue destiné au passage d'une patte de fixation clipsable du support des deux capteurs à effet Hall.

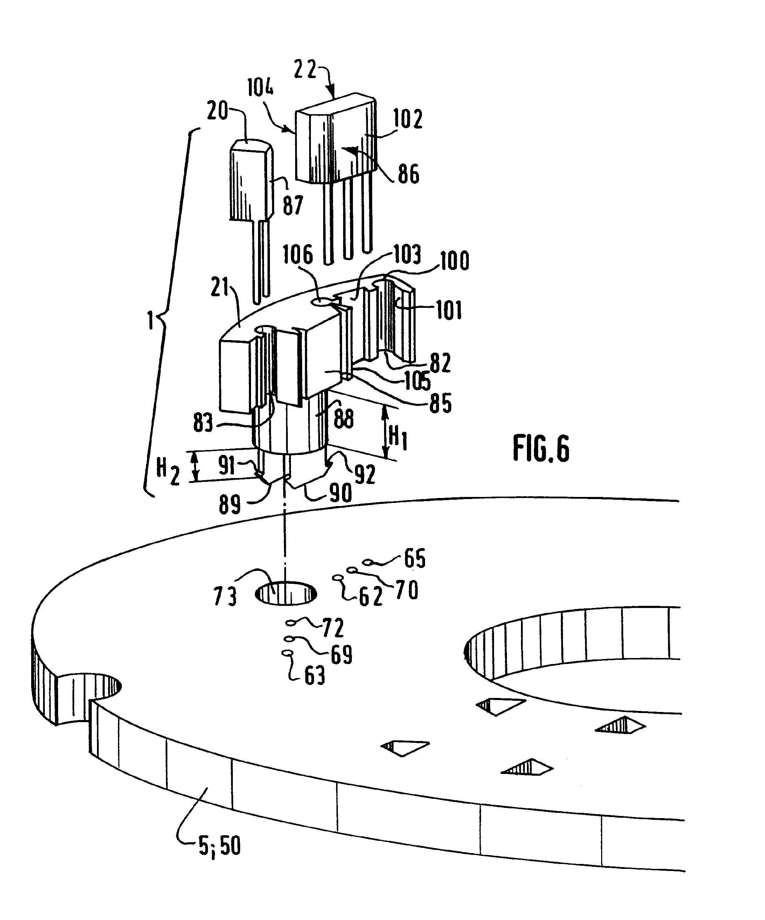

A la figure 6, on a représenté un plan de montage de l'organe de lecture 1 sur le circuit imprimé. Les deux capteurs à effet Hall 20 et 22 sont respectivement constitués par des boîtiers parallélépipèdiques, dont la face inférieure est traversée par trois pattes de connexion. Ces pattes sont destinées à pénétrer dans les trous 65,70,62 d'une part, et 72,69 et 63 déjà décrits à la figure 5. Avant cette introduction, les deux capteurs 20,22 sont introduits par glissement dans deux logements respectivement 82 et 83 d'un support 21. Le support 21 comporte une partie centrale 85 qui est destinée à fixer la distance entre les deux capteurs 20,22 d'une part et qui présente une courbure permettant d'orienter convenablement la face de détection respectivement 86 et 87 des capteurs 20 et 22 d'autre part.

D'autre part, le support 21 présente à sa partie inférieure une colonne 88 d'une hauteur H1 déterminée en fonction de la position finale d'implantation de la roue 2 ou 11 et du capteur 20-22. La colonne 88 présente une extrémité libre inférieure de hauteur H2 correspondant à l'épaisseur du circuit imprimé 5 et porte deux ergots 89 et 90 souples présentant des épaulements 91 et 92. Le pied 89-92 est destiné à pénétrer dans le trou 73 du substrat 50 déjà décrit à la figure 6. Lors de l'introduction les deux ergots 89,90 se raccrochent et sont libérés quand les épaulements 91,92 ressortent par la face libre du substrat 50.

Du fait de la forme oblongue du trou 73 et du pied 89-92, le support est fixé au point de vue de son orientation une fois installé dans le support. De plus, il y a, lors du montage, un guidage naturel des pattes précitées des capteurs à effet Hall à travers les trous de contact correspondant du substrat 50.

On remarque que chaque boîtier 20,22 enfermant le capteur présente une face de détection 102 ou 86 et 87 et une face de référence 104. La face de référence 104 est destinée à venir s'appuyer sur la face correspondante 103 du logement 82 correspondant au boîtier 22. Le logement 82 est prolongé par une aile 101 reliée élastiquement au fond du logement par une articulation souple 100. De ce fait, le boîtier 22 est fermement et souplement maintenu dans le logement 82.

Cette disposition peut être répétée sur la partie gauche du logement en une ailette 105 et une articulation 106 souple.

L'ensemble est réalisé par moulage en une seule pièce élastique dure, difficilement déformable pour pouvoir conserver les orientations prédéterminées des boîtiers 20,22.

La présente invention ne se limite pas à un dispositif de mesure tel que décrit ci-dessus. En effet, elle s'adapte facilement à des situations où les capteurs peuvent être en nombre supérieur à deux, ou encore à des situations où les capteurs sont de type optronique, chacun intégrant par exemple une cellule émettrice d'un rayonnement et/ou une cellule détectrice du rayonnement réfléchi sur le support de l'indication de position angulaire qui modifie ladite réflexion. Le rayonnement peut être de la lumière visible ou de l'infrarouge.

De plus, on a décrit un dispositif de mesure dont l'organe de lecture est disposé à l'extérieur (par rapport à l'axe de rotation) d'un support de l'indication de position angulaire. L'invention s'applique aussi au cas où l'organe de lecture est placé à l'intérieur (par rapport à l'axe de rotation) de ce support. En particulier, la courbure de l'organe 1 est inversée par rapport à ce qui est représenté aux figures annexées.

## Revendications

1. Dispositif de mesure de la position angulaire instantanée d'une partie tournante, comme le rotor d'une machine électrodynamique comme un moteur, du type comportant un organe de lecture (1) lié à une partie fixe, comme le stator de ladite machine électrodynamique, et un support d'une indication (9) de position angulaire lié à la partie tournante, caractérisé en ce que l'organe de lecture (1) comporte au moins un capteur (20,22) destiné à produire un signal de détection quand l'indication (9) passe à proximité dudit capteur, et en ce que chaque capteur est constitué par un boîtier comportant une face de référence, et étant introduit par glissement dans des logements respectifs (82, 83) d'un support (21).

2. Dispositif selon la revendication 1, caractérisé en ce que le support (21) présente une partie centrale (85) destinée à fixer la distance entre deux capteurs (20, 22) successifs.

3. Dispositif selon la revendication 1, caractérisé en ce que le support (21) des capteurs (20,22) présente une courbure permettant d'orienter convenablement une face de détection (102 ou 86, 87) des capteurs (20,22).

4. Dispositif selon la revendication 1, caractérisé en ce que le support (21) présente à sa partie inférieure une colonne (88) dont l'extrémité libre inférieure porte des ergots (89, 90) souples présentant des épaulements (91, 92), constituant ensemble un pied (89 - 92) destiné à pénétrer dans un trou (73) d'une platine (50), destinée lors de l'introduction des deux ergots souples (89, 90), à se rapprocher puis à être libérés quand des épaulements (91, 92) des ergots souples (89, 90) ressortent par la face libre de la platine (50).

5. Dispositif selon la revendication 4, caractérisé en ce que le trou (73) et le pied (89 - 92) sont de formes oblongues correspondantes de façon à ce que l'orientation du support (21) soit déterminée une fois celui-ci installé dans sur la platine (50).

6. Dispositif selon la revendication 2, caractérisé en ce que le support (21) comporte au moins un logement doté d'une face de référence (103) destinée à venir s'appuyer sur une face correspondante (104) du boîtier (22) du capteur, de façon à positionner précisément la face de détection (102) dudit boîtier.

7. Dispositif selon la revendication 6, caractérisé en ce que le logement (82) est partiellement fermé par au moins une ailette (101,105) montée sur le fond du logement par une articulation souple (100,106).

8. Dispositif selon la revendication 7, caractérisé en ce que le support (21) est réalisé par moulage en une seule pièce en un matériau élastique suffisamment rigide pour maintenir la position et l'orientation du capteur.

9. Dispositif selon l'une des revendications précédentes, caractérisé en ce que le support de l'indication (9) de position angulaire de la partie tournante est constitué par une roue (2 ; 11) portée sur une zone périphérique de la partie tournante, comme la périphérie d'un collecteur, et qui comporte des moyens de fixation comme des languettes (17) sur une entretoise (15) afin d'immobiliser la roue (2 ; 11) en rotation par rapport à l'entretoise (15).

10. Dispositif selon la revendication 9, caractérisé en ce que l'organe de lecture est du type magnétique, utilisant un effet magnétique comme l'effet Hall, et en ce que la roue (2 ; 11) est constituée en un anneau cylindrique (2), sur lequel une succession de pôles magnétiques successivement N et S sont inscrits.

11. Dispositif selon la revendication 10, caractérisé en ce que l'anneau cylindrique (2) est constitué par un anneau en matériau magnétique anisotro- pique soumis préalablement à une magnétisation telle que sa périphérie présente ladite succession de pôles N et S.

12. Dispositif selon la revendication 10, caractérisé en ce que l'anneau cylindrique (2) est constitué par un anneau en matériau amagnétique à la périphérie duquel est pratiquée une pluralité de logements recevant chacun un barreau en matériau aimanté de telle sorte que la périphérie dudit anneau cylindrique (2) présente ladite pluralité de pôles magnétiques successivement N et S.

13. Machine électrodynamique caractérisée en ce qu'elle comporte un dispositif de mesure de la position angulaire instantanée de son rotor, l'organe de lecture (1) du dispositif étant monté sur le circuit imprimé (5) portant les circuits électriques de service de la machine.
